Europäisches Patentamt

European Patent Office

Office européen des brevets

(11) Veröffentlichungsnummer: **0 459 238 A2**

# EUROPÄISCHE PATENTANMELDUNG

(21) Anmeldenummer: 91107953.1

(22) Anmeldetag: 16.05.91

(51) Int. Cl.5: **B29C 65/04**

(30) Priorität: 31.05.90 DE 4017577

(43) Veröffentlichungstag der Anmeldung:
04.12.91 Patentblatt 91/49

(84) Benannte Vertragsstaaten:
AT BE CH DE DK ES FR GB GR IT LI LU NL SE

(71) Anmelder: HFT OBERMEIER MASCHINENBAU GmbH
Breslauerstrasse 43
W-8228 Freilassing(DE)

(72) Erfinder: Machule, Lothar
Konrad Hornschuch-Strasse 19
W-7119 Weissbach(DE)
Erfinder: Obermeier, Hans R.
Sankt Martin-Strasse 13
W-8229 Saaldorf(DE)

(74) Vertreter: Leiser, Gottfried, Dipl.-Ing. et al
Patentanwälte Prinz, Leiser, Bunke & Partner
Manzingerweg 7
W-8000 München 60(DE)

(54) Verfahren zum Verschweissen wenigstens eines Bereichs einer Auflagefolie mit einer Aufnahmefläche einer Trägerschicht.

(57) Es wird ein Verfahren zum Verschweißen wenigstens eines Bereichs einer Auflagefolie (16) mit einer Aufnahmefläche einer Trägerschicht (14) mittels HF-Energie beschrieben. Bei dem Verfahren wird auf der von der Aufnahmefläche der Trägerschicht (14) abgewandten Fläche eine Folie (12) aus elektrisch leitendem Material angebracht. Die Auflagefolie (16) wird zumindest auf einen Teil der Aufnahmefläche der Trägerschicht (14) gelegt. Auf die Auflagefolie (16) wird in den mit der Trägerschicht (14) zu verschweißenden Bereich eine HF-Elektrode (18, 20) aufgesetzt, und auf einen nicht mit der Trägerschicht (14) zu verschweißenden Bereich der Auflagefolie (16) oder auf einen nicht von der Auflagefolie (16) bedeckten Teil der Auflagefolie wird eine Masseelek- trode (22) aufgelegt, deren Fläche größer als die der HF-Elektrode (18, 20) ist. Die HF-Energie wird dann eingeschaltet, während die HF-Elektrode (18, 20) mit Druck gegen die Auflagefolie (16) gehalten wird.

FIG. 1

Die Erfindung bezieht sich auf ein Verfahren gemäß dem Oberbegriff des Patentanspruchs 1.

Beim Herstellen von Schweißverbindungen zwischen einer Auflagefolie und einer Trägerschicht mittels HF-Energie treten häufig Probleme auf, wenn Materialien mit den unterschiedlichsten Dielektrizitätskonstanten betroffen sind und wenn vor allem die Trägerschicht die Deckschicht eines dicken Laminats darstellt, das selbst aus mehreren Schichten zusammengesetzt ist. Eines der Probleme besteht darin, daS es nicht ohne weiteres möglich ist, die HF-Energie genau in der Tiefe des Laminats zu konzentrieren, wo die Erhitzung und damit die Verschweißung erreicht werden soll. Wenn beispielsweise das Laminat ein Schaumkörper ist, auf den eine Textilbahn aufgeklebt ist, die an bestimmten Stellen mit einer Auflagefolie verschweißt werden soll, dann muß die HF-Energie möglichst im Bereich der Auflagefolie konzentriert werden, damit die Schweißverbindung tatsächlich nur zwischen der Auflagefolie und der Textilbahn eintritt. Solche Laminate, die mit Auflagefolien verschweißt werden, werden häufig in der Kfz-Industrie als Türinnenverkleidungen verwendet, bei denen bestimmte Bereiche mit einer Auflagefolie in Form einer Kunststoffschicht überzogen sind, während in anderen Bereichen eine mit den Sitzbezügen des entsprechenden Fahrzeugs abgestimmte Textilbahn freiliegt. Damit ein attraktives Aussehen erzielt wird, muß zwischen der Auflagefolie und der Textilbahn eine saubere Schweißverbindung hergestellt werden, die die freiliegende Fläche der Textilbahn umgibt. Auch in der Täschnerindustrie ist es häufig erwünscht, Laminate aus den unterschiedlichsten Materialien mit einer Auflagefolie zu verschweißen, wobei stets ein sauberes Aussehen der hergestellten Schweißverbindung erreicht werden soll.

Es sei im vorliegenden Zusammenhang darauf hingewiesen, daß der Ausdruck "Verschweißen" in der einschlägigen Technik auch dann verwendet wird, wenn mit Hilfe von HF-Energie Kunststoffolien bis zum Schmelzen erhitzt und in Textilmaterialien eingedrückt werden, so daß die hergestellte Verbindung nicht eine Schweißverbindung im eigentlichen Sinne ist, bei der beide Materialien über den Schmelzpunkt erhitzt werden, sondern bei dem nur das eine Material schmilzt, in das andere Material eindringt und durch Formschluß an dem anderen Material haftet.

Mit Hilfe der Erfindung soll ein Verfahren der eingangs angegebenen Art geschaffen werden, das es ermöglicht, saubere Schweißverbindungen zwischen einer Auflagefolie und einer Trägerschicht herzustellen, auch wenn die Trägerschicht aus einem Laminat aus mehreren Schichten mit unterschiedlichen Dielektrizitätskonstanten und Dicken besteht.

Erfindungsgemäß wird diese Aufgabe mit den im Kennzeichen des Patentanspruchs 1 angegebenen Merkmalen gelöst. Bei der Anwendung des erfindungsgemäßen Verfahrens wird die HF-Energie stets dort konzentriert, wo die Schweißverbindung tatsächlich hergestellt werden soll, was unabhängig davon gilt, ob die Trägerschicht die oberste Schicht eines Laminats darstellt oder nicht. Das erfindungsgemäße Verfahren ermöglicht die Herstellung sauberer Schweißnähte, so daS hochwertige Waren hergestellt werden können, die auch gehobenen Ansprüchen voll gerecht werden.

Vorteilhafte Weiterbildungen der Erfindung sind in den Unteransprüchen gekennzeichnet.

Ein Ausführungsbeispiel der Erfindung wird nun anhand der Zeichnung erläutert. Es zeigen:

Fig. 1 einen Schnitt der zu verschweißenden Materialien, wobei die HF-Elektroden und eine Masseelektrode auf die Auflagefolie aufgesetzt sind,

Fig. 2 einen ebensolchen Schnitt wie in Fig. 1, nachdem die HF-Energie eingeschaltet worden ist und die HF-Elektroden auf die Auflagefolie gedrückt worden sind,

Fig. 3 den gleichen Schnitt wie in Fig. 2, nachdem die HF-Elektroden und die Masseelektrode von der Auflagefolie abgehoben worden sind und

Fig. 4 einen Schnitt durch das Resultat des erfindungsgemäßen Verfahrens nach dem der von den Schweißlinien begrenzte Teil der Auflagefolie entfernt worden ist, so daß die darunter befindliche Trägerschicht freiliegt.

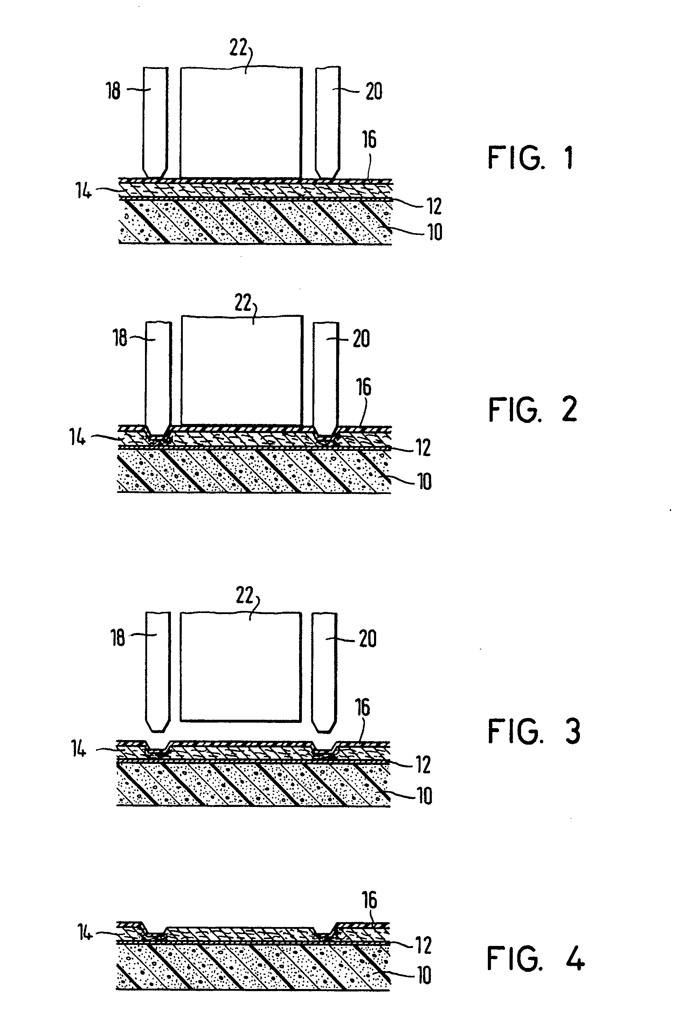

In Fig. 1 ist im Schnitt ein Laminat dargestellt, das aus einer Basisschicht 10 aus einem Polyurethanschaum, einer dünnen Aluminiumfolie 12 und einer Trägerschicht 14 aus Textilmaterial besteht. Auf dem Laminat ist eine Auflagefolie 16 aus Kunststoff aufgelegt, die mit Hilfe der HF-Schweißtechnik mit bestimmten Bereichen der Trägerschicht 14 verschweißt werden soll. Das Laminat wird dadurch zusammengehalten, daß die Aluminiumfolie 12 auf die Basisschicht 10 geklebt ist und die Trägerschicht 14 wiederum auf die Aluminiumfolie geklebt ist.

In Fig. 1 sind schematisch zwei HF-Elektroden 18, 20 und eine Masseelektrode 22 dargestellt. Die Form der Elektroden hängt vom jeweiligen Anwendungsfall ab, nämlich davon, an welchen Stellen die Schweißverbindung zwischen der Auflagefolie 16 und der Trägerschicht 14 hergestellt werden soll. Im Beispiel von Fig. 1 soll die Schweißverbindung im Bereich der unteren Enden der HF-Elektroden 18, 20 hergestellt werden. Bei diesen HF-Elektroden 18, 20 kann es sich auch um eine einzige Elektrode handeln, die die Masseelektrode 22 mit Abstand umgibt. Die Masseelektrode 22 kann dabei beispielsweise kreisförmig, rechteckig, oval oder dergl. sein. Wie aus Fig. 1 zu erkennen ist, hat die Masseelektrode 22 eine wesentlich größere Kontaktfläche zur Auflagefolie 16 als die HF-Elektroden 18, 20. Der Grund hierfür geht aus der anschließenden Beschreibung noch genauer hervor.

In Fig. 2 ist die Stufe des Schweißverfahrens dargestellt, die nach dem Anlegen der HF-Energie an die HF-Elektroden 18, 20 und nach dem Eindrücken dieser Elektroden in die Auflagefolie 16 erreicht wird. Nach dem Einschalten der HF-Energie bildet sich im Bereich zwischen den unteren Enden der HF-Elektroden 18, 20 und der Aluminiumfolie 12 ein HF-Feld mit relativ hoher Energiedichte. Die Aluminiumfolie 12 wirkt dabei als eine Hilfsmasse, was dadurch zustande kommt, daß die Masseelektrode 22 mit einer gegenüber der Fläche der HF-Elektroden 18, 20 relativ großen Fläche auf der Auflagefolie 16 aufliegt. In praktischen Versuchen hat sich erwiesen, daß die Fläche der Masseelektrode 22 etwa drei bis fünfmal größer als die Berührungsfläche zwischen den HF-Elektroden 18, 20 und der Auflagefolie 16 sein soll. Nur wenn diese Flächenbeziehung eingehalten wird, ergibt sich unterhalb der HF-Elektroden 18, 20 eine so hohe Energiedichte, daß die zum Schmelzen der Auflagefolie 16 notwendige Wärme erzeugt wird. Durch den auf die HF-Elektroden 18, 20 ausgeübten Druck wird das geschmolzene Material der Auflagefolie 16 in das Textilmaterial der Trägerschicht 14 eingedrückt, so daß nach dem Erkalten der Auflagefolie 16 eine formschlüssige Verbindung mit der Trägerschicht 14 in den Bereichen erreicht worden ist, in denen das Material der Auflagefolie 16 in das Textilmaterial der Trägerschicht 14 eingedrungen ist.

In Fig. 3 ist das Resultat des Schweißvorgangs nach Abheben der HF-Elektroden 18, 20 und der Masseelektrode 22 dargestellt.

Die Auflagefolie 16 kann gemäß Fig. 4 nun im Bereich zwischen den Schweißstellen entfernt werden, so daß das Textilmaterial der Trägerschicht 14 in diesen Bereichen freigelegt wird. In der geschilderten Weise kann ein sogenannter Textilspiegel erzeugt werden, wie er häufig in den Türinnenverkleidungen von Kraftfahrzeugen angewendet wird. Die Innenverkleidung kann damit in den Bereichen, in denen sie stark strapaziert wird, also beispielsweise unmittelbar im Bereich der Türgriffe mit der Auflagefolie verkleidet sein, während sie in anderen Bereichen, in denen sie weniger strapaziert wird, ein gefälliges und gegebenenfalls an die Sitzbezüge angepaßtes Aussehen hat, da das Textilmaterial der Trägerschicht 14 freiliegt.

Durch eine entsprechende Formung der unteren Stirnseiten der HF-Elektroden 18, 20 ist es möglich, dem Kunststoffmaterial der Auflagefolie 16 in den Schweißbereichen ein bestimmtes Aussehen, beispielsweise das Aussehen einer Ziernaht, zu verleihen. Dadurch kann der Eindruck erweckt werden, als wäre die Auflagefolie 16 auf die Trägerschicht 14 aufgenäht worden. Bei Anwendung des beschriebenen Verfahrens zur Herstellung von Koffern, Handtaschen und der gleichen ist die Möglichkeit, den erzeugten Schweißverbindungen eine gewünschte Struktur zu verleihen, von besonderem Vorteil.

Bei dem beschriebenen Verfahren ist es durch das Anbringen der Aluminiumfolie 12 auf der Rückseite der Trägerschicht 14 ermöglicht worden, saubere Schweißverbindungen unabhängig von der Dicke des Laminats, auf das die Auflagefolie 16 aufgeschweißt werden soll, herzustellen.

Es sei darauf hingewiesen, daß anstelle des im beschriebenen Ausführungsbeispiel als Trägerschicht verwendeten Textilmaterials auch andere Materialien, beispielsweise Kunststoffmaterialien verwendet werden können. Als Basisschicht kann anstelle des erwähnten Polyurethanschaums ohne weiteres auch ein anderes Material, beispielsweise Preßpappe, Karton, Holz oder dergleichen verwendet werden.

## Patentansprüche

1. Verfahren zum Verschweißen wenigstens eines Bereichs einer Auflagefolie mit einer Aufnahmefläche einer Trägerschicht mittels HF-Energie, dadurch gekennzeichnet, daß auf der von der Aufnahmefläche der Trägerschicht (14) abgewandten Fläche der Trägerschicht (14) eine Folie (12) aus elektrisch leitendem Material angebracht wird, daß die Auflagefolie (16) zumindest auf einen Teil der Aufnahmefläche der Trägerschicht (14) gelegt wird, daß auf die Auflagefolie (16) in dem wenigstens einen mit der Trägerschicht (14) zu verschweißenden Bereich eine HF-Elektrode (18, 20) aufgesetzt wird und auf einen nicht mit der Trägerschicht (14) zu verschweißenden Bereich der Auflagefolie (16) oder auf einen nicht von der Auflagefolie (16) bedeckten Teil der Aufnahmefläche eine Masseelektrode (22) aufgelegt wird, deren Fläche größer als die der HF-Elektrode (18, 20) ist, und daß die HF-Energie angelegt wird, während die HF-Elektrode (18, 20) mit Druck gegen die Auflagefolie (16) gehalten wird.

2. Verfahren nach Anspruch 1, dadurch gekennzeichnet, daß als Trägerschicht (14) ein Textilmaterial verwendet wird.

3. Verfahren nach Anspruch 1, dadurch gekennzeichnet, daß als Trägerschicht (14) ein Kunststoffmaterial verwendet wird.

4.  Verfahren nach einem der vorhergehenden Ansprüche, dadurch gekennzeichnet, daß als Folie (12) aus elektrisch leitendem Material eine Aluminiumfolie verwendet wird.

5.  Verfahren nach einem der vorhergehenden Ansprüche, dadurch gekennzeichnet, daß die Folie (12) aus elektrisch leitendem Material auf einer dicken Basisschicht (10) angebracht wird, und daß die Trägerschicht (14) auf der von der Basisschicht (10) abgewandten Seite der elektrisch leitenden Folie (12) liegt.

6.  Verfahren nach Anspruch 4, dadurch gekennzeichnet, daß für die Basisschicht (10) ein Polyurethanschaum verwendet wird.

FIG. 1

FIG. 2

FIG. 3

FIG. 4